(19) Europäisches Patentamt
European Patent Office
Office européen des brevets

(11) **EP 4 067 105 A1**

(12) **EUROPEAN PATENT APPLICATION**
published in accordance with Art. 153(4) EPC

(43) Date of publication:
**05.10.2022 Bulletin 2022/40**

(21) Application number: **20891577.7**

(22) Date of filing: **19.08.2020**

(51) International Patent Classification (IPC):
**B42D 25/328** (2014.01)

(52) Cooperative Patent Classification (CPC):
**B42D 25/328; B42D 25/36**

(86) International application number:
**PCT/CN2020/110023**

(87) International publication number:
**WO 2021/103670 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2019 CN 201911184133**

(71) Applicants:
• **Zhongchao Special Security Technology Co., Ltd**
**Beijing 100070 (CN)**

• **China Banknote Printing and Minting Corp.**
**Beijing 100044 (CN)**

(72) Inventors:
• **CUI, Haibo**
**Beijing 100070 (CN)**
• **SUN, Kai**
**Beijing 100070 (CN)**
• **ZHU, Jun**
**Beijing 100070 (CN)**

(74) Representative: **Glawe, Delfs, Moll**
**Partnerschaft mbB von**
**Patent- und Rechtsanwälten**
**Postfach 13 03 91**
**20103 Hamburg (DE)**

(54) **OPTICAL ANTI-COUNTERFEITING ELEMENT AND OPTICAL ANTI-COUNTERFEITING PRODUCT**

(57) Disclosed are an optical anti-counterfeiting element and an optical anti-counterfeiting product. The optical anti-counterfeiting element includes: a substrate (1), wherein the substrate includes a first surface (11) and a second surface (12) opposite each other; a micrographic layer (2) formed on the second surface of the substrate, wherein the micrographic layer includes a micro-graphic-text region (21) showing a preset graphic-text information and a background region (22), at least part of the micro-graphic-text region or the background region is covered with a small reflection surface (3), and the small reflection surface is covered with a color modulation structure (4); and a sampling layer (5) formed on the first surface of the substrate, wherein the sampling layer is configured for sampling the micro-graphic-text layer and composing, with sampled graphics, the preset graphic-text information of a preset color showing a moire magnification effect. A colored anti-counterfeiting feature with a color varying effect showing a moire magnification effect can be generated without coloring, so as to improve an anti-counterfeiting capacity and identifiability.

Fig. 5

EP 4 067 105 A1

Processed by Luminess, 75001 PARIS (FR)

## Description

### Cross-Reference to Related Application

The present invention claims the right of Chinese Patent Application No.201911184133.8 filed on November 27, 2019, which is incorporated in its entirety herein by reference.

### Technical Field

The present invention relates to the field of optical anti-counterfeiting, and in particular to an optical anti-counterfeiting element and an optical anti-counterfeiting product.

### Background

Making imitation and counterfeiting difficult, a microlens array anti-counterfeiting technology has awfully high application value when applied to banknotes, identity documents, securities and other articles. Being conductive to rapid public identification, this technology as well as a holographic anti-counterfeiting technology, an optically variable anti-counterfeiting technology and the like are together widely applied to high value-added printed matter, which effectively resists a copying function of a digital technology and makes counterfeiting difficult.

The prior art discloses an anti-counterfeiting element with a microlens array and a micro-graphic-text array on two surfaces of a substrate respectively. Specifically, the microlens array is used as a sampling tool to sample corresponding micro-graphic-text, and sampling points from different observation angles are designed, so as to show a visible dynamically magnified graphic. In order to facilitate public identification, the micro-graphic-text is usually colored such that anti-counterfeiting elements with color features can be observed in environments with point light sources or natural light. At present, there are mainly two kinds of coloring technique: one is used to scrape ink in micro-graphic-text, that is, to fill stroke grooves of the micro-graphic-text with colored ink. The other one is used to realize coloring by means of microstructures, that is, to fill stroke grooves of micro-graphic-text with finer microstructures, so as to show a black optical effect. However, since the micro-graphic-text has an immensely fine structure (about 2 $\mu$m), the existing coloring process is extremely difficult to realize.

### Summary

The objective of the present invention is to provide an optical anti-counterfeiting element and an optical anti-counterfeiting product, which may generate a colored anti-counterfeiting feature with a color varying effect showing a moire magnification effect, so as to improve an anti-counterfeiting capacity and identifiability.

In order to realize the above objective, one embodiment of the present invention provides an optical anti-counterfeiting element. The optical anti-counterfeiting element includes: a substrate, wherein the substrate includes a first surface and a second surface opposite each other; a micrographic layer formed on the second surface of the substrate, wherein the micrographic layer includes: a micro-graphic-text region for showing preset graphic-text information and a background region, at least part of the micro-graphic-text region or the background region is covered with a small reflection surface, and the small reflection surface is covered with a color modulation structure; and a sampling layer formed on the first surface of the substrate, wherein the sampling layer is configured for sampling the micro-graphic-text layer and composing, with sampled graphics, the preset graphic-text information of a preset color showing a moire magnification effect.

In an embodiment, the micro-graphic-text region covered with the small reflection surface or the background region covered with the small reflection surface corresponds to a position of a sampling element in the sampling layer.

In an embodiment, the sampling element in the sampling layer is a conventional cylindrical lens or a fresnel cylindrical lens.

In an embodiment, a slope direction of the small reflection surface is consistent with an infinite direction of the sampling element in the sampling layer.

In an embodiment, a longitudinal feature size of the small reflection surface is smaller than a focal depth of the sampling element in the sampling layer.

In an embodiment, under the circumstance that the micro-graphic-text region is a first region showing a first preset graphic-text information of the preset graphic-text information, and the first region is covered with a first group of the small reflection surface, the color modulation structure is a first color modulation structure group configured to the first preset graphic-text information of the preset graphic-text information to appear in a first preset color. Correspondingly, the sampling layer is configured for sampling the micrographic layer and composing, with sampled graphics, the first preset graphic-text information of the preset graphic-text information of the first preset color showing a moire magnification effect at a first preset position, wherein the first preset position is related to a position of the first group of the small reflection surface.

In an embodiment, under the circumstance that the micro-graphic-text region includes a second region showing a second preset graphic-text information of the preset graphic-text information and a third region showing a third preset graphic-text information of the preset graphic-text information, the second region is covered with a second group of the small reflection surface, and the third region is covered with a third group of the small reflection surface, the color modulation structure includes a second color modulation structure group configured to the second preset graphic-text information of the preset graphic-text information to appear in a second preset color, and a third color modulation structure group configured to the third preset graphic-text information of the preset graphic-text information to appear in a third preset color. Correspondingly, the sampling layer is configured for sampling the micrographic layer and composing, with sampled graphics, the second preset graphic-text information of the preset graphic-text information of the second preset color showing a moire magnification effect at a second preset position and the third preset graphic-text information of the preset graphic-text information of the third preset color at a third preset position, wherein the second preset position is related to a position of the second group of the small reflection surface, and the third preset position is related to a position of the third group of the small reflection surface.

In an embodiment, under the circumstance that the micro-graphic-text region includes a fourth region showing a fourth preset graphic-text information of the preset graphic-text information and a fifth region showing fifth preset graphic-text information of the preset graphic-text information, and the fourth region is covered with a fourth group of the small reflection surface, the color modulation structure includes a fourth color modulation structure group configured to the fourth preset graphic-text information of the preset graphic-text information to appear in a fourth preset color, and a fifth color modulation structure group configured to the fifth preset graphic-text information to appear in a fifth preset color. Correspondingly, the sampling layer is configured for sampling the micrographic layer and composing, with sampled graphics, the fourth preset graphic-text information of the preset graphic-text information of the fourth preset color showing a moire magnification effect at a fourth preset position and the fifth preset graphic-text information of the fifth preset color showing a moire magnification effect at a fifth preset position, wherein the fourth preset position is related to a position of the fourth group of the small reflection surface, and the fifth preset position is related to a position of the fifth color modulation structure group.

In an embodiment, under the circumstance that the micro-graphic-text region is a sixth region showing a sixth preset graphic-text information of the preset graphic-text information, and the background region is covered with a fifth group of the small reflection surface, the color modulation structure is a sixth color modulation structure group configured to the background region to appear in a sixth preset color. Correspondingly, the sampling layer is configured for sampling the micro-graphic layer and composing, with sampled graphics, the sixth preset graphic-text information of the preset graphic-text information, of the sixth preset color showing a moire magnification effect at a sixth preset position, in the background region, wherein the sixth preset position is related to a position of the fifth group of the small reflection surface.

In an embodiment, the color modulation structure includes a metal film having a preset thickness, or a dielectric film having a preset thickness; and a microstructure with a steep sidewall, or a sub-wavelength microstructure with a steep sidewall.

In an embodiment, the sampling element has a period ranging from 5 $\mu$m to 500 $\mu$m.

In an embodiment, the sampling element has a focal length ranging from 10 $\mu$m to 100 $\mu$m.

A second aspect of the present invention provides an anti-counterfeiting product. The anti-counterfeiting product includes the optical anti-counterfeiting element.

In an embodiment, the anti-counterfeiting product includes a banknote, an identity card, a bank card or a draft.

By means of the above technical solutions, according to the present invention, the micro-graphic-text region is creatively designed as a region with the preset graphic-text information, and part of the micro-graphic-text region or the background region is covered with the small reflection surface and the color modulation structure such that the colored anti-counterfeiting feature with the color varying effect showing the moire magnification effect is able to be generated without coloring, so as to improve the anti-counterfeiting capacity and the identifiability.

Other features and advantages of the present invention will be described in detail in the specific implementations that follows.

## Brief Description of the Drawings

The accompanying drawings, which are used for providing further understanding of the utility model and constitute a part of the description, together with the following specific implementations serve to explain the utility model instead of limiting same. In the accompanying drawings:

FIG. 1 is a structural diagram of an optical anti-counterfeiting element provided in an embodiment of the present invention;

FIG. 2 (a) is a schematic diagram of a sampling layer composed of conventional cylindrical lens arrays provided in an embodiment of the present invention;

FIG. 2 (b) is a schematic diagram of a sampling layer composed of fresnel cylindrical lens arrays provided in an embodiment of the present invention;

FIG. 3 is a sectional schematic diagram of a focal plane of a sampling element provided in an embodiment of the present invention;

FIG. 4 (a) is a top view of a second surface of a substrate covered with a small reflection surface as provided in an embodiment of the present invention;

FIG. 4 (b) is a top view of an optical anti-counterfeiting element observed from the second surface of the substrate as provided in an embodiment of the present invention;

FIG. 4 (c) is a schematic diagram of a dynamic effect of the optical anti-counterfeiting element provided in an embodiment of the present invention;

FIG. 4 (d) is a schematic diagram of a dynamic effect of the optical anti-counterfeiting element provided in an embodiment of the present invention;

FIG. 5 is a schematic diagram of the optical anti-counterfeiting element provided in an embodiment of the present invention and imaging thereof;

FIG. 6 is a schematic diagram of the optical anti-counterfeiting element provided in an embodiment of the present invention and imaging thereof;

FIG. 7 is a schematic diagram of the optical anti-counterfeiting element provided in an embodiment of the present invention and imaging thereof;

FIG. 8 is a schematic diagram of the optical anti-counterfeiting element provided in an embodiment of the present invention and imaging thereof; and

FIG. 9 is a schematic diagram of the optical anti-counterfeiting element provided in an embodiment of the present invention and imaging thereof.

Description of the Reference Numerals:

| | | | |
|---|---|---|---|
| 1 | Substrate | 2 | Micrographic layer |
| 3 | Small reflection surface | 4 | Color modulation structure |
| 5 | Sampling layer | 11 | First surface |
| 12 | Second surface | 21 | Micro-graphic-text region |
| 22 | Background region | 41 | Metal film |
| 42 | Sub-wavelength microstructure | | |

## Detailed Description of the Embodiments

The specific implementations of the present invention are described in detail below in conjunction with the accompanying drawings. It should be understood that the specific implementations described herein are merely illustrative of the present invention and are not intended to limit the present invention.

Before the embodiments of the present invention are introduced, an optical moire magnification effect is simply defined. The moire magnification effect means that periodically arranged sampling elements and micro-graphic-text are mutually superposed according to a certain angle, and sampling element arrays are used for carrying out spatial sampling on micro-graphic-text arrays to form graphic-text with a pixel magnification effect.

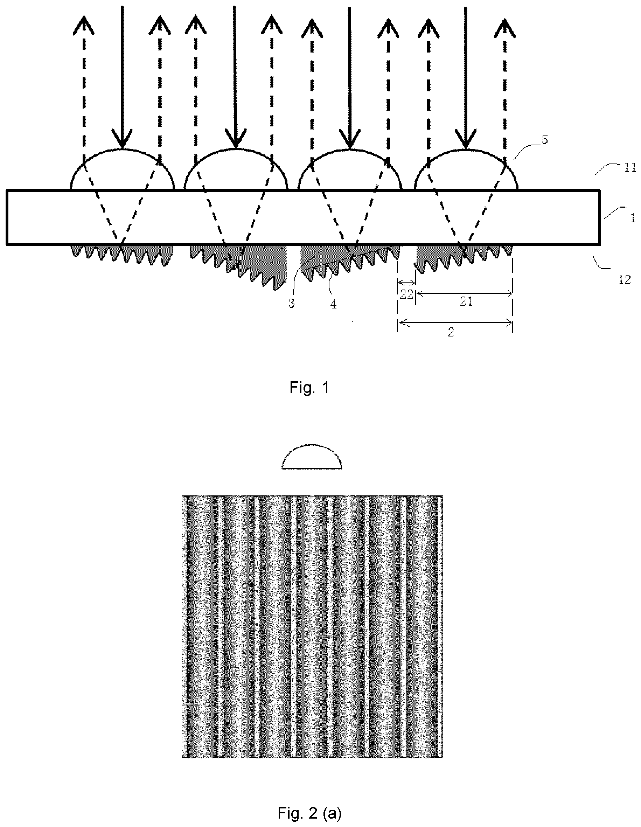

FIG. 1 is a structural schematic diagram of an optical anti-counterfeiting element provided in an embodiment of the present invention; As shown in FIG. 1, the optical anti-counterfeiting element includes: a substrate 1, wherein the substrate 1 includes a first surface 11 and a second surface 12 opposite each other; a micrographic layer 2 formed on the second surface 12 of the substrate 1, wherein the micrographic layer 2 includes: a micro-graphic-text region 21 showing a preset graphic-text information and a background region 22, at least part of the micro-graphic-text region 21 (showing the preset graphic-text information) or the background region 22 (without preset graphic-text information) is covered with a small reflection surface 3, and the small reflection surface 3 is covered with a color modulation structure 4; and a sampling layer 5 formed on the first surface 11 of the substrate 1, wherein the sampling layer is configured for sampling the micrographic layer 2 and composing, with sampled graphics, into the preset graphic-text information of a preset color showing a moire magnification effect.

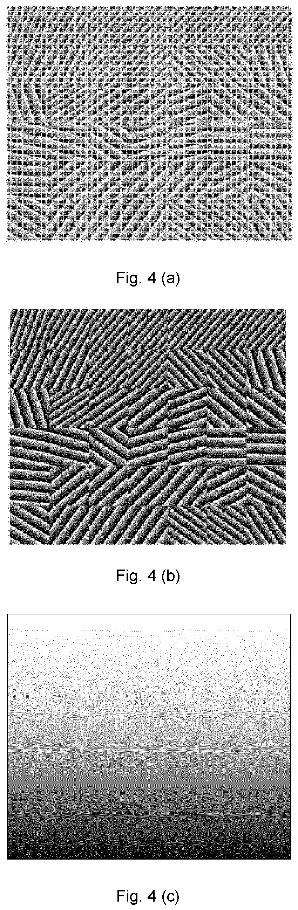

It should be noted that the small reflection surface 3 has two feature parameters of an inclination angle (or a gradient) and an azimuth angle (as shown in FIG. 4 (a)). Since all the small reflection surfaces 3 are randomly distributed (that is, the inclination angles and the azimuth angles are randomly distributed (microscopically)), scattered light is able to be reflected to eyes of an observer to the maximum extent during plane wave incidence such that the observer may observe an anti-counterfeiting feature from multiple angles. The small reflection surface 3 may have a transverse feature size of 0.5 $\mu$m to 500 $\mu$m (preferably 20 $\mu$m to 200 $\mu$m and most preferably 20 $\mu$m to 50 $\mu$m) and a longitudinal feature size less than 50 $\mu$m (preferably less than 10 $\mu$m and most preferably 1.5 $\mu$m). In addition, the small reflection surface 3 may have a linear or non-linear section, that is, the section of the small reflection surface 3 is able to be a smooth inclined surface (that is, a plane) without a curvature change, or is able to be curved (that is, a curved surface, such as a portion of a paraboloid, an arc surface or other shapes with curvature).

If there are only the small reflection surfaces 3 in the micro-graphic-text region or the background region, the graphics collected by the sampling layer may only be gray, so as to realize "black-gray-white" graphics. In order to enrich information amount of the graphics, to increase technical difficulty so as to improve an anti-counterfeiting capacity and to facilitate public observation, in the present invention, the "color modulation structure" is arranged on the small reflection surface 3 (a top view of the optical anti-counterfeiting element observed from the second surface of the substrate is shown in FIG. 4 (a)), so as to realize colorization of the graphics. Specifically, a holographic interference exposure method is able to be used to form the color modulation structure 4 on the small reflection surface 3. Then, parameters (such as a feature size and a depth) of the color modulation structure 4 are able to be changed to control a color of the preset graphic-text information, thereby realizing a customized color. Thus, the shown preset graphic-text information is able to be single-colored, colorful or even gradient-colored.

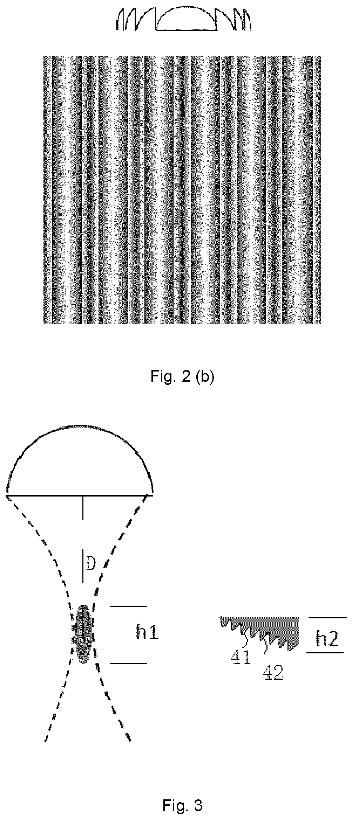

As shown in FIG. 3, the color modulation structure 4 include: a metal film 41 having a preset thickness, or a dielectric film (not shown); and a microstructure (not shown) with a steep sidewall, or a sub-wavelength microstructure 42. The sub-wavelength microstructure 42 and the microstructure (not shown) with the steep sidewall is able to be a one-dimensional grating or a two-dimensional grating.

The principle of realizing colorization of the graphics by means of the two different color modulation structures 4 is briefly described below.

For the color modulation structure 4 formed by the metal film 41 having a preset thickness and the sub-wavelength microstructure 42 shown in FIG. 3, if only a diffraction grating (that is, the sub-wavelength microstructure 42) having a period smaller than a wavelength of visible light is configured for the color modulation structure 4, the corresponding optical anti-counterfeiting element will not produce obvious color features. In view of this, the metal film 41 is able to be added to the sub-wavelength microstructure 30, and a color feature and/or a polarization feature is able to be generated by plasma resonance absorption of the metal film 41. The metal film 41 has the preset thickness less than 50 nm and preferably less than 20 nm. The metal film 41 includes at least one of a metal layer, a metal compound layer, a high/low refractive index material stacked layer and a fabry-perot interferometer. The metal film 41 is able to be formed of one or more of gold, silver, copper, aluminum, iron, tin, zinc, nickel, chromium, etc. Preferably, the metal film 41 is able to be an aluminum layer formed by means of vapor deposition, and has a thickness of 30 nm. Of course, the metal film 41 is able to be replaced with the dielectric film, which is able to be a single dielectric layer or a multilayer dielectric layer. A dielectric material used is able to be selected from one or more of $MgF_2$, $SiO_2$, $Al_2O_3$, MgO, PMMA, $TiO_2$, ZnS and ZnO, and the multilayer dielectric film generally uses a high-low-high film system design. Preferably, $SiO_2$ is configured for evaporation of a three-layer structure (such as Al (aluminum)/$SiO_2$/Cr (Chromium)), and an optically variable color varies from yellow to green. For the three-layer structure formed on the two-dimensional grating, the optically variable color varies from red to green; and for three-layer structure form on the small reflection surface, the optically variable color varies from yellow to green.

The feature size of the sub-wavelength microstructure 42 is much smaller than that of the small reflection surface 3. A size of the sub-wavelength microstructure is able to be obtained according to a plasma resonance circumstance. Taking the one-dimensional grating as an example, when incident light is incident, at an angle $\theta$, on the one-dimensional grating, diffracted light of different orders will be generated. When the diffracted light propagates on a surface of the one-dimensional grating, resonance is generated by means of the diffracted light with surface plasma waves excited on the surface of the metal film, that is, wave vectors are equal. Thus, a relation between the period d of the grating and a plasma resonance wavelength is able to be obtained:

$$d = \frac{m}{\sqrt{\frac{\varepsilon_1 n_1{}^2}{\varepsilon_1 + n_1{}^2} - n_1}} * \lambda_0 \qquad (1)$$

wherein m is a diffraction order of the incident light on the grating, $\lambda_0$ is a wavelength in vacuum, $n_1$ is a refractive index of the metal film, $n1 = \sqrt{\varepsilon 0}$ ($\varepsilon_0$ is a dielectric constant of the incident light in a medium), and $\varepsilon_1$ is the dielectric constant of the metal film. The period d of the sub-wavelength grating structure is able to be obtained from formula (1).

In order to realize a plurality of colors, the period of the above two-dimensional sub-wavelength microstructure is variable, ranges from 50 nm to 700 nm in an x-direction and/or a y-direction (that is, a transverse feature size), and preferably ranges from 200 nm to 400 nm. A groove depth of the sub-wavelength microstructure ranges from 10 nm to 500 nm, and preferably ranges from 50 nm to 300 nm.

The sub-wavelength microstructure 42 is able to be a one-dimensional grating or a two-dimensional grating, and grids of the two-dimensional grating is able to be distributed in an orthogonal structure, a honeycomb structure, a two-dimensional bravais lattice structure, a random structure, etc.; and a groove type of the sub-wavelength microstructure is able to be sinusoidal, rectangular, zigzag, etc. It should be understood that the sub-wavelength microstructure 42 is not limited to the structures described above, and these sub-wavelength microstructures are able to be spliced or combined in a practical optical anti-counterfeiting element. The sub-wavelength microstructure 42 is preferably the two-dimensional grating.

For the color modulation structure (not shown) formed by the metal film having the preset thickness and the microstructure with the steep sidewall, since upper and lower surfaces of the microstructure with the steep sidewall have a vertical height difference, under irradiation of incident light, optical paths of any two beams of reflected light change to form an optical path difference, such that interference occurs between the two beams of reflected light, and finally reflected light in a specific color is obtained in a reflection direction. The microstructure with the steep sidewall is able to be a one-dimensional grating or a two-dimensional grating, and a feature size thereof in an x-direction and/or a y-direction ranges from 0.5 $\mu$m to 100 $\mu$m, and preferably ranges from 1 $\mu$m to 20 $\mu$m. The microstructure 40 with the steep sidewall has a depth in a z-direction ranging from 0.05 $\mu$m to 10 $\mu$m and preferably ranging from 0.1 $\mu$m to 3 $\mu$m.

The sub-wavelength microstructure 42 or the microstructure (not shown) with the steep sidewall (both of which are able to be abbreviated as microstructure) is able to be periodic in an x-direction and a y-direction, may have periodicity within a certain range, or is able to be random. "Period" means that all the microstructures have the same arrangement rule and parameter within the scope of the whole optical anti-counterfeiting element. "Periodicity within a certain range" means that the microstructures have the same arrangement rule and parameter within a certain small range, but do not have the same arrangement rule and parameter within the range of the whole optical anti-counterfeiting element. "Random" means that shape parameters and arrangements of the microstructures do not have the same rule, and the microstructures are randomly distributed.

Since a stroke width of the preset graphic-text information in the micro-graphic-text region is extremely small (for example, generally less than 3 $\mu$m), and a transverse feature size of the small reflection surface 3 is generally greater than 20 $\mu$m, in order to fill the stroke in a smaller size with the small reflection surface in a larger size, a column graphic-text distribution mode is able to be used, that is, a slope direction of the small reflection surface (that is, an inclined surface direction) is consistent with an infinite direction of a sampling element in the sampling layer. Thus, information collected by the sampling layer may more accurately reflect optical features of the graphic-text information. Then, the sampling element is able to be a cylindrical lens, for example, a conventional cylindrical lens as shown in FIG. 2 (a) or a fresnel cylindrical lens as shown in FIG. 2 (b). Since a plate-making process of the cylindrical lens is simple, and an optical effect is able to be better realized, in the preferred embodiment, the sampling element is able to be the conventional cylindrical lens.

In order to form a clear colored graphic showing a moire magnification effect, the sampling element in the sampling layer are required to carry out sampling at a focal plane thereof, such that the longitudinal feature size of the small reflection surface is able to be designed to be smaller than a focal depth of the sampling element in the sampling layer. Specifically, as shown in FIG. 3, if the focal depth (that is, a longitudinal size of an actual spot of a focal point) of the sampling element is hl, and the longitudinal feature size of the small reflection surface 3 is h2, values of h2 and h1 are able to be designed and h2 is designed to be smaller than hl. The sampling element has a focal depth ranging from 0 $\mu$m to 5 $\mu$m. Moreover, the sampling element may has a thickness ranging from I $\mu$m to 15 $\mu$m, a focal length D ranging from 10 $\mu$m to 100 $\mu$m, and a period ranging from 5 $\mu$m to 500 $\mu$m (preferably ranging from 10 $\mu$m to 50 $\mu$m).

In addition, in order to ensure that the sampling layer may collect the preset graphic-text information more efficiently, in the embodiment of the present invention, the micro-graphic-text region covered with the small reflection surface or the background region covered with the small reflection surface corresponds to a position of the sampling element in the sampling layer.

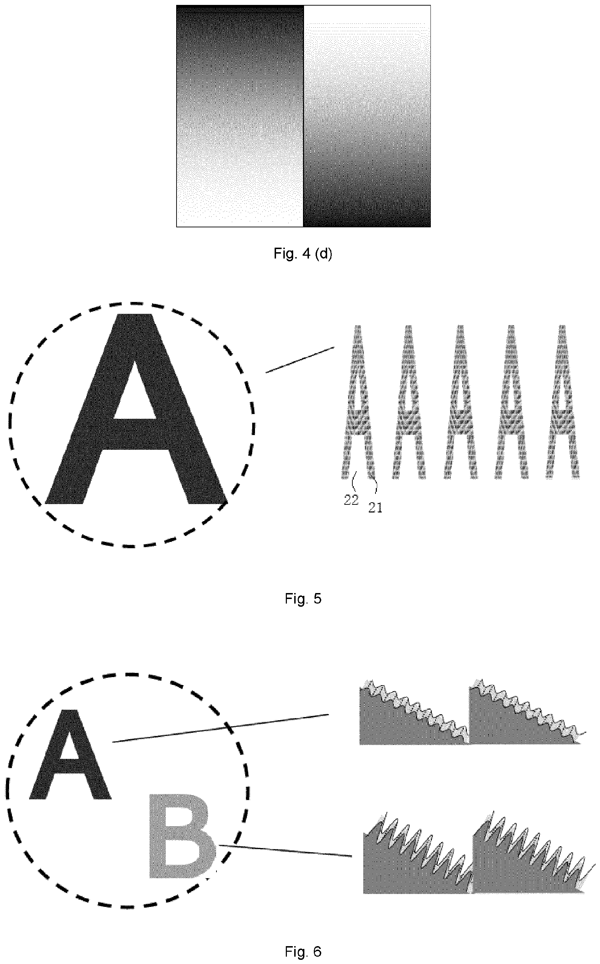

Different graphic effects are able to be observed from a front side and a back side of the optical anti-counterfeiting element. Specifically, from the first surface 11 side of the substrate 1 (that is, from the front side), the graphic after sampling and composing is able to be observed, that is, an optical effect observed from the front side is an optical image showing a moire magnification effect and formed by sampling a micro-graphic-text array by a microlens array. At the same time, from the second surface 12 side (that is, from the back side), a dynamic flickering feature is able to be also observed, that is, an optical effect observed from the back side is a dynamic optically variable effect, similar to a rolling star effect, formed by an arrangement of the small reflection surfaces. For back side observation, during plane wave incidence, an inclination angle and an azimuth angle of each independent small reflection surface are designed according to a certain rule (macroscopically) (as shown in FIG. 4 (b)), and this design requires that during observation of an observer at a certain angle, the small reflection surface in a horizontal bar region with a certain width is able to be reflected into observer's eyes, such that the observer may see flickering bright bar lines. When the anti-counterfeiting element is inclined, positions of the flickering bright bar lines also move, that is, a dynamic effect is generated, which is as shown in FIG. 4 (c). In addition, by means of a theoretical design, flickering bright bar lines relatively moving may also be formed, which is as shown in FIG. 4 (d).

Specifically, a specific structure and an imaging result of the optical anti-counterfeiting element are described in detail below by means of four embodiments. In various embodiments, the slope direction of the small reflection surface is consistent with the infinite direction of the conventional cylindrical lens. The conventional cylindrical lens has a period of 25 $\mu$m, a height of 6 $\mu$m, a focal length of 35 $\mu$m and a focal depth of 3.5 $\mu$m. The small reflection surface has a transverse feature size preferably of 10 $\mu$m to 50 $\mu$m, and a longitudinal feature size preferably of 1.5 $\mu$m. The sub-wavelength microstructure has a period of 300 nm.

Embodiment 1

Under the circumstance that the micro-graphic-text region is a first region showing a first preset graphic-text information of the preset graphic-text information (such as an array of letters "A" as shown in FIG. 5), and the first region is covered with a first group of the small reflection surface, the color modulation structure is a first color modulation structure group configured to the first preset graphic-text information of the preset graphic-text information to appear in a first preset color. Correspondingly, the sampling layer is configured for sampling the micrographic layer and composing, with sampled graphics, the first preset graphic-text information of the preset graphic-text information (such as the array of letters "A", and FIG. 5 shows only one letter "A" in the array) of the first preset color showing a moire magnification effect at a first preset position, wherein the first preset position is related to a position of the first group of the small reflection surface.

As shown in FIG. 5, for the micro-graphic-text layer, the micro-graphic-text region 21 is filled with several small reflection surfaces, and the background region 22 is a flat region (not filled with small reflection surfaces). The sub-wavelength microstructures (each with a depth of 120 nm) on the different small reflection surfaces are the same. When observed from the first surface side (that is, the front side) of the substrate, the sub-wavelength microstructure may modulate light reflected by the small reflection surfaces into light of the same color (such as red), thereby showing a graphic A of a single color (such as red) at a position corresponding to the micro-graphic-text region 21. That is, by using the sampling layer for sampling the micro-text layer, the following results are able to be obtained: the micro-graphic-text region 21 covered with the sub-wavelength microstructure is red, and the background region 22 is yellow. After the optical anti-counterfeiting element is inclined at a certain angle, colors of the micro-picture region 21 and the background region 22 are the same and are able to be both green such that colorful dynamic moire graphic-text is able to be formed. When observed from the second surface side (that is, the back side) of the substrate, an optically variable color varies from red to green, and in an uncovered region, an optically variable color varies from yellow to green, such that a dynamic flickering feature is shown.

Embodiment 2

A reflectance spectrum reflected by the sub-wavelength microstructure is able to be obtained according to a coupled wave theory, and a depth (or a groove depth), a period, a groove type and a metal film of the sub-wavelength microstructure may influence a resonance absorption wavelength of the reflectance spectrum. Especially, an influence of the groove depth is particularly obvious. Embodiment 2 shows an optical anti-counterfeiting element of which two different micro-graphic-text regions are covered with sub-wavelength microstructures having different groove depths, which is as shown in FIG. 6.

Under the circumstance that the micro-graphic-text region includes a second region showing a second preset graphic-text information of the preset graphic-text information (such as an array of letters "A") and a third region showing a third preset graphic-text information of the preset graphic-text information (such as an array of letters "B"), the second region is covered with a second group of the small reflection surface, and the third region is covered with a third group of the small reflection surface, the color modulation structure includes a second color modulation structure group configured to the second preset graphic-text information of the preset graphic-text information to appear in a second preset color, and a third color modulation structure group configured to the third preset graphic-text information of the preset graphic-text information to appear in a third preset color. Correspondingly, the sampling layer is configured for sampling the micrographic layer and composing, with sampled graphics, the second preset graphic-text information of the preset graphic-text information (such as the array of letters "A", and FIG. 6 shows only one letter "A" in the array) of the second preset color showing a moire magnification effect at a second preset position and the third preset graphic-text information of the preset graphic-text information (such as the array of letters "B", and FIG. 6 shows only one letter "B" in the array) of the third preset color at a third preset position, wherein the second preset position is related to a position of the second group of the small reflection surface, and the third preset position is related to a position of the third group of the small reflection surface.

For the micro-graphic layer, the micro-graphic-text region A and the micro-graphic-text region B are filled with several small reflection surfaces, and the background region is a flat region (not filled with small reflection surfaces). The sub-wavelength microstructures (each with a depth of 120 nm) on the different small reflection surfaces in the micro-graphic-text region A are the same, and the sub-wavelength microstructures (each with a depth of 150 nm) on the different small reflection surfaces in the micro-graphic-text region B are the same. When observed from the first surface side (that is, the front side) of the substrate, the sub-wavelength microstructure in the micro-graphic-text region A may modulate light reflected by the small reflection surfaces into light of the same color (such as red), thereby showing a graphic A of a single color (such as red) at a position corresponding to the micro-graphic-text region A. The sub-wavelength microstructure in the micro-graphic-text region B may modulate light reflected by the small reflection surfaces into light of the same color (such as blue), thereby showing a graphic B of a single color (such as blue) at a position corresponding to the micro-graphic-text region B. That is, by using the sampling layer for sampling the micro-graphic-text layer, the following results are able to be obtained: the micro-graphic-text region A is red, the micro-graphic-text region B is blue, and the background region is yellow, that is, the micro-graphic-text region and the background region have strong color contrast. After the optical anti-counterfeiting element is inclined at a certain angle, colors of the micro-graphic-text region and the background region are the same and are able to be both green such that a colorful dynamic moire graphic-text is able to be formed. When observed from the second surface side (that is, the back side) of the substrate, an optically variable color varies from red to green, and in an uncovered region, an optically variable color varies from yellow to green, such that a dynamic flickering feature is shown.

Embodiment 3

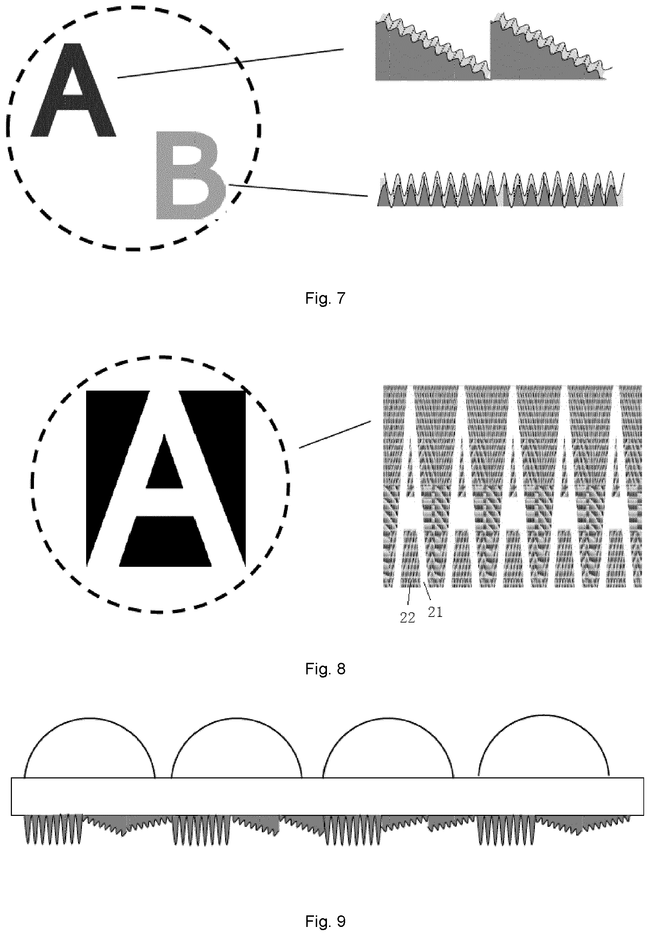

Since a multi-color effect of the anti-counterfeiting element is realized mainly by changing the groove depth of the sub-wavelength microstructure, in order to reduce the process difficulty of preparing the microstructure in the preparation process of the anti-counterfeiting element, the small reflection surfaces with larger sizes is able to be removed (that is, the sub-wavelength microstructure is directly formed on the second surface of the substrate, which is as shown in FIG. 7), and the anti-counterfeiting element may also show a three-color effect similar to that in Embodiment 2 described above. Thus, Embodiment 3 shows an optical anti-counterfeiting element of which two different micro-graphic-text regions are covered with sub-wavelength microstructures having different groove depths, and in micro-graphic-text region B, the second surface of the substrate is covered with the sub-wavelength microstructure directly (the small reflection surfaces are omitted), which is as shown in FIG. 7.

Under the circumstance that the micro-graphic-text region includes a fourth region showing a fourth preset graphic-text information of the preset graphic-text information (such as an array of letters "A") and a fifth region showing a fifth preset graphic-text information of the preset graphic-text information (such as an array of letters "B"), and the fourth region is covered with a fourth group of the small reflection surface, the color modulation structure includes a fourth color modulation structure group configured to the fourth preset graphic-text information of the preset graphic-text information to appear in a fourth preset color, and a fifth color modulation structure group configured to the fifth preset graphic-text information to appear in a fifth preset color. Correspondingly, the sampling layer is configured for sampling the micro-graphic layer and composing, with sampled graphics, the fourth preset graphic-text information of the preset graphic-text information (such as the array of letters "A", and FIG. 7 shows only one letter "A" in the array) of the fourth preset color showing a moire magnification effect at a fourth preset position and the fifth preset graphic-text information (such as the array of letters "B", and FIG. 7 shows only one letter "B" in the array) of the fifth preset color showing a moire magnification effect at a fifth preset position, wherein the fourth preset position is related to a position of the fourth group of the small reflection surface, and the fifth preset position is related to a position of the fifth color modulation structure group.

For the micro-graphic-text layer, the micro-graphic-text region A is filled with several small reflection surfaces, the micro-graphic-text region B is not filled with small reflection surfaces, and the micro-graphic-text region B and the background region are flat regions (not filled with small reflection surfaces). The sub-wavelength microstructures (each with a depth of 120 nm) on the different small reflection surfaces in the micro-graphic-text region A are the same, and the micro-graphic-text region B is covered with the sub-wavelength microstructures (each with a depth of 150 nm) with the same groove depth, that is, the sub-wavelength microstructures distributed in a plane are introduced in the micro-graphic-text region B. When observed from the first surface side (that is, the front side) of the substrate, the sub-wavelength microstructure in the micro-graphic-text region A may modulate light reflected by the small reflection surfaces into light of the same color (such as red), thereby showing a graphic A of a single color (such as red) at a position corresponding to the micro-graphic-text region A. The sub-wavelength microstructure in the micro-graphic-text region B may modulate reflected light from the substrate into light of the same color (such as blue), thereby showing a graphic B of a single color (such as blue) at a position corresponding to the micro-graphic-text region B. That is, by using the sampling layer for sampling the micro-graphic-text layer, the following results are able to be obtained: the micro-graphic-text region A is red, the micro-graphic-text region B is blue, and the background region is yellow, that is, the micro-graphic-text region and the background region have strong color contrast, and the micro-graphic-text region A and the micro-graphic-text region B also have strong color contrast. After the optical anti-counterfeiting element is inclined at a certain angle, colors of the micro-graphic-text region and the background region are the same and iare able to be both green such that a colorful dynamic moire graphic-text is able to be formed. When observed from the second surface side (that is, the back side) of the substrate, an optically variable color varies from red to green, and in an uncovered region, an optically variable color varies from yellow to green, such that a dynamic flickering feature is shown.

Embodiment 4

Under the circumstance that the micro-graphic-text region is a sixth region showing a sixth preset graphic-text information of the preset graphic-text information (such as an array of letters "A" as shown in FIG. 8), and the background region is covered with a fifth group of the small reflection surface, the color modulation structure is a sixth color modulation structure group configured to the background region to appear in a sixth preset color. Correspondingly, the sampling layer is configured for sampling the micrographic layer and composing, with sampled graphics, the sixth preset graphic-text information of the preset graphic-text information (such as the array of letters "A", and FIG. 8 shows only one letter "A" in the array), of the sixth preset color showing a moire magnification effect at a sixth preset position, in the background region, wherein the sixth preset position is related to a position of the fifth group of the small reflection surface.

As shown in FIG. 8, for the micro-graphic-text layer, the micro-graphic-text region A is a flat region (not filled with small reflection surfaces), and the background region is filled with several small reflection surfaces. The sub-wavelength microstructures (each with a depth of 120 nm) on the different small reflection surfaces in the background region are the same. When observed from the first surface side (that is, the front side) of the substrate, the sub-wavelength microstructure may modulate light reflected by the small reflection surfaces into light of the same color (such as red), thereby showing a graphic A of a single color (such as red) at a position corresponding to the micro-graphic-text region. That is, by using the sampling layer for sampling the micro-text layer, the following results are able to be obtained: the micro-graphic-text region A covered with the sub-wavelength microstructure is red, and the background region is yellow. After the anti-counterfeiting element is inclined at a certain angle, colors of the micro-picture region and the background region are the same color and are able to be both green such that a colorful dynamic moire graphic-text is able to be formed. When observed from the second surface side (that is, the back side) of the substrate, an optically variable color varies from red to green, and in an uncovered region, an optically variable color varies from yellow to green, such that a dynamic flickering feature is shown.

It should be noted that, generally, the background region has an area larger than that of the micro-graphic-text region, and by using the design solution of the Embodiment 2 (for example, FIG. 8), the second surface of the substrate is able to be filled with more sub-wavelength microstructures, thereby forming a color with better saturation.

Embodiment 5

In order to improve the color contrast between the graphic-text region and the background region, on the basis of the above embodiments, the background region is able to be transparent by using a precise dealumination process, and then the micro-graphic-text region and the background region are coated with white ink such that an optical effect of a white background is able to be formed, which is as shown in FIG. 9. For example, a dealuminated microstructure may have a period of 5 $\mu$m to 50 $\mu$m, and have a depth of 1 $\mu$m to 15 $\mu$m.

Of course, in the present invention, the small reflection surfaces and the microstructures are able to be arranged in the background region and the micro-graphic-text region at the same time (of course, the microstructures in the background region and the micro-graphic-text region should be different), which is as shown in FIG. 7. Moreover, the preset graphic-text information in the present invention is not limited to the array of letters "A" and the array of letters "B" in the above embodiments, and is also applicable to any other graphic-text arrays having specific meanings and any combinations thereof.

In addition, in the embodiment, an imaging color may also be modulated by changing the sub-wavelength microstructure, which is not described herein.

In order to enable the above optical anti-counterfeiting element to adapt to an existing product carrier commonly used, generally certain requirements are made for the size of a first structure. For example, a longitudinal size (that is, a height) of the small reflection surface may not be overhigh, otherwise the small reflection surface will have a larger thickness, such that the small reflection surface may not be embedded into paper or attached to the carrier, resulting in an uneven consequence. Thus, generally, the small reflection surface has a height less than 50 $\mu$m and preferably less than 10 $\mu$m such that the small reflection surface is able to be conveniently applied to a windowing safety line and is embedded into the paper; or as a wide strip product, the small reflection surface is attached to the paper or a plastic substrate, and flatness of the substrate under the above two circumstances is able to be kept.

In conclusion, according to the present invention, the micro-graphic-text region is creatively designed as a region with the preset graphic-text information, and part of the micro-graphic-text region or the background region is covered with the small reflection surface and the color modulation structure such that a colored anti-counterfeiting feature with a color varying effect showing a moire magnification effect is able to be generated without coloring, so as to improve an anti-counterfeiting capacity and identifiability.

The present invention further provides an anti-counterfeiting product. The anti-counterfeiting product includes the above optical anti-counterfeiting element. The optical anti-counterfeiting element is able to be placed into the above the anti-counterfeiting product in manners of a windowing safety line, a windowing sticker, a label, etc. The anti-counterfeiting product includes high value-added products, such as banknotes, identity cards, bank cards, drafts and securities.

The preferred implementations of the present invention are described in detail above with reference to the accompanying drawings. However, the present invention is not limited to specific details of the above implementations. Within the scope of the technical concept of the present invention, various simple modifications are able to be made to the technical solution of the present invention, and these simple modifications all fall within the scope of protection of the present invention.

It should also be noted that various specific technical features described in the specific implementations described above may be combined in any suitable manner, without contradiction. In order to avoid unnecessary repetition, the present invention will not describe various possible combinations separately.

In addition, various different implementations of the present invention may also be combined randomly, so long as same do not deviate from the idea of the present invention, and same should also be regarded as disclosed in the present invention.

**Claims**

1. An optical anti-counterfeiting element, comprising:

   a substrate, wherein the substrate comprises a first surface and a second surface opposite each other;
   a micrographic layer formed on the second surface of the substrate, wherein the micrographic layer comprises a micro-graphic-text region showing a preset graphic-text information and a background region, at least part of the micro-graphic-text region or the background region is covered with a small reflection surface, and the small reflection surface is covered with a color modulation structure; and
   a sampling layer formed on the first surface of the substrate, wherein the sampling layer is configured for sampling the micrographic layer and composing, with sampled graphics, the preset graphic-text information of a preset color showing a moire magnification effect.

2. The optical anti-counterfeiting element as claimed in claim 1, wherein the micro-graphic-text region covered with the small reflection surface or the background region covered with the small reflection surface corresponds to a position of a sampling element in the sampling layer.

3. The optical anti-counterfeiting element as claimed in claim 1, wherein a sampling element in the sampling layer is a conventional cylindrical lens or a fresnel cylindrical lens.

4. The optical anti-counterfeiting element as claimed in claim 1, wherein a slope direction of the small reflection surface is consistent with an infinite direction of a sampling element in the sampling layer.

5. The optical anti-counterfeiting element as claimed in claim 1, wherein a longitudinal feature size of the small reflection surface is smaller than a focal depth of a sampling element in the sampling layer.

**6.** The optical anti-counterfeiting element as claimed in claim 1, wherein under the circumstance that the micro-graphic-text region is a first region showing a first preset graphic-text information of the preset graphic-text information, and the first region is covered with a first group of the small reflection surface, the color modulation structure is a first color modulation structure group configured to the first preset graphic-text information of the preset graphic-text information to appear in a first preset color, and

corresponding ly, the sampling layer is configured for sampling the micrographic layer and composing, with sampled graphics, the first preset graphic-text information of the preset graphic-text information of the first preset color showing a moire magnification effect at a first preset position, wherein the first preset position is related to a position of the first group of the small reflection surface.

**7.** The optical anti-counterfeiting element as claimed in claim 1, wherein under the circumstance that the micro-graphic-text region comprises a second region showing a second preset graphic-text information of the preset graphic-text information and a third region showing a third preset graphic-text information of the preset graphic-text information, the second region is covered with a second group of the small reflection surface, and the third region is covered with a third group of the small reflection surface, the color modulation structure comprises a second color modulation structure group configured to the second preset graphic-text information of the preset graphic-text information to appear in a second preset color, and a third color modulation structure group configured to the third preset graphic-text information of the preset graphic-text information to appear in a third preset color, and

correspondingly, the sampling layer is configured for sampling the micrographic layer and composing, with sampled graphics, the second preset graphic-text information of the preset graphic-text information of the second preset color showing a moire magnification effect at a second preset position and the third preset graphic-text information of the preset graphic-text information of the third preset color at a third preset position, wherein the second preset position is related to a position of the second group of the small reflection surface, and the third preset position is related to a position of the third group of the small reflection surface.

**8.** The optical anti-counterfeiting element as claimed in claim 1, wherein under the circumstance that the micro-graphic-text region comprises a fourth region showing a fourth preset graphic-text information of the preset graphic-text information and a fifth region showing fifth preset graphic-text information of the preset graphic-text information, and the fourth region is covered with a fourth group of the small reflection surface, the color modulation structure comprises a fourth color modulation structure group configured to the fourth preset graphic-text information of the preset graphic-text information to appear in a fourth preset color, and a fifth color modulation structure group configured to the fifth preset graphic-text information to appear in a fifth preset color, and

correspondingly, the sampling layer is configured for sampling the micrographic layer and composing, with sampled graphics, the fourth preset graphic-text information of the preset graphic-text information of the fourth preset color showing a moire magnification effect at a fourth preset position and the fifth preset graphic-text information of the fifth preset color showing a moire magnification effect at a fifth preset position, wherein the fourth preset position is related to a position of the fourth group of the small reflection surface, and the fifth preset position is related to a position of the fifth color modulation structure group.

**9.** The optical anti-counterfeiting element as claimed in claim 1, wherein under the circumstance that the micro-graphic-text region is a sixth region showing a sixth preset graphic-text information of the preset graphic-text information, and the background region is covered with a fifth group of the small reflection surface, the color modulation structure is a sixth color modulation structure group configured to the background region to appear in a sixth preset color, and correspondingly, the sampling layer is configured for sampling the micrographic layer and composing, with sampled graphics, the sixth preset graphic-text information of the preset graphic-text information, of the sixth preset color showing a moire magnification effect at a sixth preset position, in the background region, wherein the sixth preset position is related to a position of the fifth group of the small reflection surface.

**10.** The optical anti-counterfeiting element as claimed in claim 1, wherein the color modulation structure comprises:

 a metal film having a preset thickness, or a dielectric film having a preset thickness; and
 a microstructure with a steep sidewall, or a sub-wavelength microstructure with a steep sidewall.

**11.** The optical anti-counterfeiting element as claimed in claim 1, wherein a sampling element has a period ranging from 5 $\mu$m to 500 $\mu$m.

**12.** The optical anti-counterfeiting element as claimed in claim 1, wherein a sampling element has a focal length ranging from 10 $\mu$m to 100 $\mu$m.

**13.** An anti-counterfeiting product, comprising the optical anti-counterfeiting element as claimed in any one of claims 1-12.

**14.** The anti-counterfeiting product as claimed in claim 13, comprising a banknote, an identity card, a bank card or a draft.

Fig. 1

Fig. 2 (a)

Fig. 2 (b)

Fig. 3

Fig. 4 (a)

Fig. 4 (b)

Fig. 4 (c)

Fig. 4 (d)

22  21

Fig. 5

Fig. 6

Fig. 7

22  21

Fig. 8

Fig. 9

## INTERNATIONAL SEARCH REPORT

| | International application No. |
|---|---|
| | **PCT/CN2020/110023** |

### A. CLASSIFICATION OF SUBJECT MATTER

B42D 25/328(2014.01)i

According to International Patent Classification (IPC) or to both national classification and IPC

### B. FIELDS SEARCHED

Minimum documentation searched (classification system followed by classification symbols)

B42D 15/02,B42D 15/10,B42D 25/-

Documentation searched other than minimum documentation to the extent that such documents are included in the fields searched

Electronic data base consulted during the international search (name of data base and, where practicable, search terms used)

CNABS; CNTXT; VEN; CNKI: 防伪, 安全, 反射面, 反射小面, 颜色调制, 透镜, 亚波长结构, 金属, fabricat+, forg+, counterfeit+, secur+, reflect+, facet, surface, face, lens, metal, sub w wavelength, structure

### C. DOCUMENTS CONSIDERED TO BE RELEVANT

| Category* | Citation of document, with indication, where appropriate, of the relevant passages | Relevant to claim No. |
|---|---|---|
| Y | CN 108454266 A (ZHONGCHAO SPECIAL SECURITY TECHNOLOGY CO., LTD. et al.) 28 August 2018 (2018-08-28) description paragraphs 16-30, figures 1-5 | 1-14 |
| Y | CN 108656782 A (ZHONGCHAO SPECIAL SECURITY TECHNOLOGY CO., LTD. et al.) 16 October 2018 (2018-10-16) description paragraphs 45-80, figures 1-7 | 1-14 |
| A | EP 2853411 A1 (GIESECKE & DEVRIENT GMBH) 01 April 2015 (2015-04-01) entire document | 1-14 |
| A | CN 103358808 A (ZHONGCHAO SPECIAL SECURITY TECHNOLOGY CO., LTD. et al.) 23 October 2013 (2013-10-23) entire document | 1-14 |
| A | CN 107921810 A (GIESECKE & DEVRIENT CURRENCY TECHNOLOGY GMBH) 17 April 2018 (2018-04-17) entire document | 1-14 |
| A | EP 3339048 A1 (GIESECKE DEVRIENT CURRENCY TECH GMBH) 27 June 2018 (2018-06-27) entire document | 1-14 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2020** | **26 November 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/110023**

**C.    DOCUMENTS CONSIDERED TO BE RELEVANT**

| Category* | Citation of document, with indication, where appropriate, of the relevant passages | Relevant to claim No. |
|---|---|---|
| A | CN 103068526 A (GIESECKE & DEVRIENT GMBH) 24 April 2013 (2013-04-24) entire document | 1-14 |

Form PCT/ISA/210 (second sheet) (January 2015)

**EP 4 067 105 A1**

**INTERNATIONAL SEARCH REPORT**
Information on patent family members

International application No.

**PCT/CN2020/110023**

| Patent document cited in search report | | | Publication date (day/month/year) | Patent family member(s) | | | Publication date (day/month/year) |
|---|---|---|---|---|---|---|---|
| CN | 108454266 | A | 28 August 2018 | None | | | |
| CN | 108656782 | A | 16 October 2018 | None | | | |
| EP | 2853411 | A1 | 01 April 2015 | DE | 102013016041 | A1 | 26 March 2015 |
| CN | 103358808 | A | 23 October 2013 | None | | | |
| CN | 107921810 | A | 17 April 2018 | WO | 2016188619 | A1 | 01 December 2016 |
| | | | | DE | 102015006793 | A1 | 01 December 2016 |
| | | | | EP | 3302995 | A1 | 11 April 2018 |
| EP | 3339048 | A1 | 27 June 2018 | DE | 102016015393 | A1 | 28 June 2018 |
| CN | 103068526 | A | 24 April 2013 | US | 2013099474 | A1 | 25 April 2013 |
| | | | | AU | 2016256797 | A1 | 01 December 2016 |
| | | | | HK | 1178843 | A1 | 14 July 2017 |
| | | | | WO | 2012000669 | A1 | 05 January 2012 |
| | | | | EP | 2588276 | A1 | 08 May 2013 |
| | | | | EP | 3401117 | A1 | 14 November 2018 |
| | | | | AU | 2011273910 | A1 | 07 February 2013 |
| | | | | RU | 2013104092 | A | 27 August 2014 |
| | | | | DE | 102010025775 | A1 | 05 January 2012 |
| | | | | IN | 201203866 | P2 | 21 February 2014 |

Form PCT/ISA/210 (patent family annex) (January 2015)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911184133